# EUROPEAN PATENT APPLICATION

(11) **EP 2 549 325 A1**
(43) Date of publication of application: **23.01.2013**
(21) Application number: 12162242.7
(22) Date of filing: 29.03.2012
(51) Int. Cl.: G02F 1/1333, G02F 1/1339

(54) **User terminal and display panel thereof**

(30) Priority: 18.07.2011 KR 20110070796
(71) Applicant: Samsung Electronics Co., Ltd., Suwon-si, Gyeonggi-do, 443-742 (KR)
(72) Inventor: Lim, Sil Kuy, Gyeonggi-do (KR); Kim, Dong Sub, Gyeonggi-do (KR)
(74) Representative: Jenkins, Richard Gavin

(57) **Abstract**

A user terminal includes a display panel (130) comprising a liquid crystal layer (161) between glass plates (153,155), each disposed at a lower surface of a touch panel (110). The display panel (130) comprising a black matrix (139) at an edge area of an active area (137) used for displaying an image, and photo spacers (163) mounted on one of the glass plates for sustaining a gap between the glass plates and supporting flow of liquid crystals in the liquid crystal layer. The photo spacers comprise dummy photo spacers (169) at the black matrix (139) to uniformly distribute liquid crystals between the glass plates (153,155).

## Description

### BACKGROUND OF THE INVENTION

### 1. Field of the Invention:

The present invention relates to a user terminal. More particularly, although not exclusively, the present invention relates to a display panel of a user terminal.

### 2. Description of the Related Art:

In general, as communication technologies continue to advance, various advanced functions are being added to a user terminal. In such a case, the user terminal is able to perform more complex functions. However, the user terminal needs to include an input unit such as a keyboard or a mouse for performing the various advanced functions, and it is not easy to carry the input unit.

Accordingly, in order to address these problems, a present user terminal often includes a touch screen instead of a keyboard or a mouse. In this case, the touch screen includes a display panel for displaying an image and a Touch Screen Panel (TSP) mounted on the display panel for detecting a touch action of the user generated on a surface thereof. That is, the user terminal displays an image through the touch screen and performs various functions by detecting the user's touch action. Here, the display panel may be formed as a Liquid Crystal Display (LCD) panel of a structure in which liquid crystals are injected between two glass plates.

However, in such a user terminal, when the display panel is formed as an LCD panel, various defects may occur in the display panel. For example, in a lamination process of mounting the touch panel on the display panel, liquid crystals are condensed in an edge area between glass plates according to a pressure applied to the display panel. Thereby, a yellowing phenomenon occurs in the edge area of the display panel. Also, the liquid crystals are non-uniformly distributed between the glass plates of the display panel. Thereby, an empty space is formed between the glass plates. Accordingly, the display panel may easily succumb to an external impact due to these structural shortcomings.

It is an aim of certain embodiments of the invention to solve, mitigate or obviate, at least partly, at least one of the problems and/or disadvantages associated with the prior art. Certain embodiments aim to provide at least one of the advantages described below.

Certain aspects of the present invention address at least the abovementioned problems and/or disadvantages and to provide at least the advantages described below. Accordingly, an aim of certain embodiments of the present invention is to provide a user terminal that can suppress a defect from occurring in a display panel when manufacturing the user terminal.

Another aim of certain embodiments of the present invention is to provide a user terminal that can smoothly flow liquid crystals between glass plates of a display panel.

Still another aim of certain embodiments of the present invention is to provide a user terminal that can uniformly distribute liquid crystals between glass plates of a display panel.

In accordance with an aspect of the present invention, a display panel mounted in a user terminal is provided. The display panel includes glass plates, each comprising an active area for displaying an image and a black matrix at an edge area of the active area, a liquid crystal layer between the glass plates, and photo spacers, mounted on one of the glass plates and received in the liquid crystal layer, for supporting flow of liquid crystals in the liquid crystal layer and for sustaining a gap between the glass plates, wherein the photo spacers comprise dummy photo spacers disposed at the black matrix between the glass plates for inverting a flow direction of liquid crystals advancing toward the black matrix from the active area is provided.

In accordance with an aspect of the present invention, a user terminal is provided. The user terminal includes a touch panel for detecting a touch generated on a surface thereof, and a display panel comprising glass plates, each disposed at a lower surface of the touch panel and comprising an active area for displaying an image and a black matrix at an edge area of the active area, a liquid crystal layer between the glass plates, and photo spacers, mounted on one of the glass plates and received in the liquid crystal layer, for supporting flow of liquid crystals in the liquid crystal layer and for sustaining a gap between the glass plates, wherein the photo spacers comprise dummy photo spacers disposed at a black matrix between the glass plates for inverting a flow direction of liquid crystals advancing toward the black matrix from the active area.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, and features and advantages of certain aspects and exemplary embodiments of the present invention will be more apparent from the following description taken in conjunction with the accompanying drawings, in which:

FIG. 1 is a perspective view illustrating a user terminal according to an exemplary embodiment of the present invention;

FIG. 2 is an exploded perspective view illustrating a user terminal according to an exemplary embodiment of the present invention;

FIG. 3 is a cross-sectional view illustrating a user terminal according to an exemplary embodiment of the present invention;

FIG. 4 is a cross-sectional view illustrating a user terminal according to an exemplary embodiment of the present invention;

FIG. 5 is a cross-sectional view illustrating a display panel according to an exemplary embodiment of the present invention; and

FIG. 6 is a plan view illustrating a display panel according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

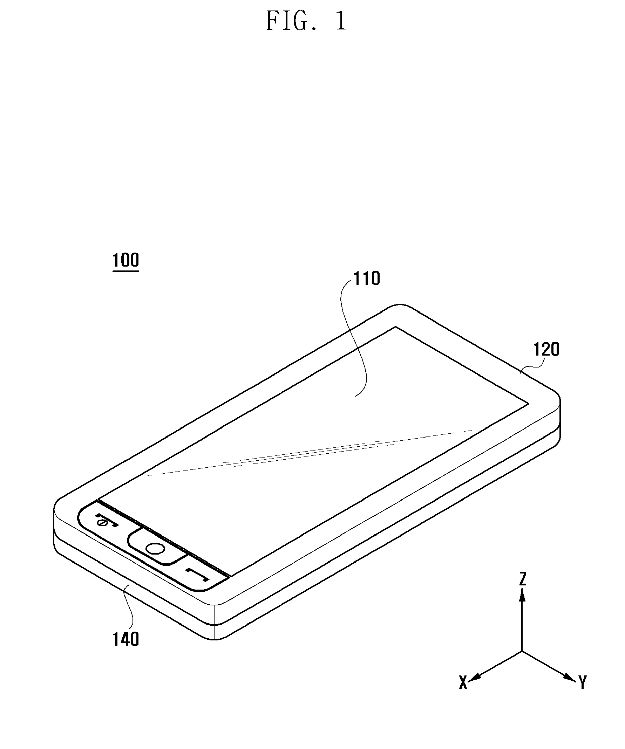

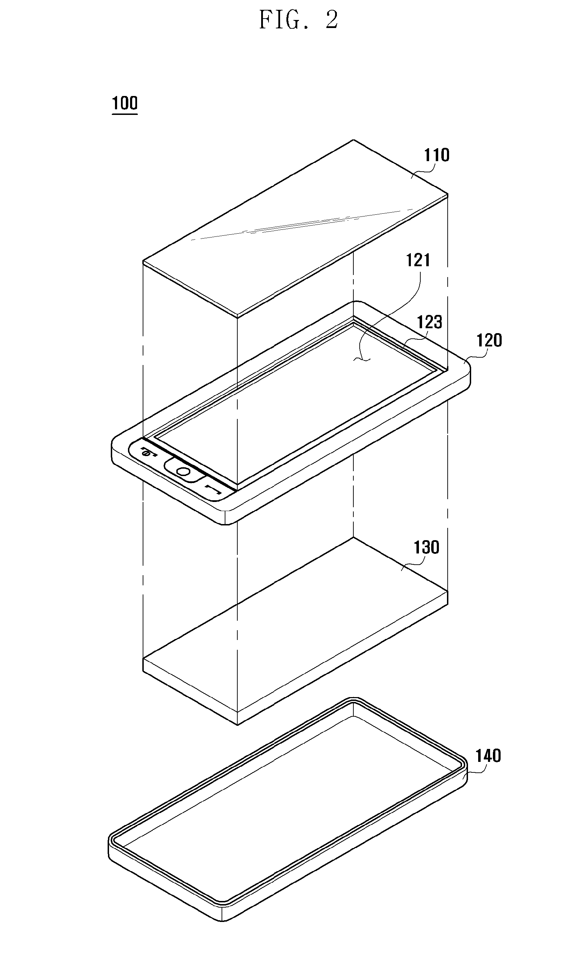

FIG. 1 is a perspective view illustrating a user terminal according to an exemplary embodiment of the present invention, and FIG. 2 is an exploded perspective view illustrating a user terminal according to an exemplary embodiment of the present invention. In the present exemplary embodiment, it is assumed that the user terminal is a mobile phone.

Referring to FIGs. 1 and 2, a user terminal 100 includes a touch panel 110, a cover chassis 120, a display panel 130, and a panel bracket 140.

The touch panel 110 performs a function of protecting an internal configuration of the user terminal 100 and performs a function of detecting a touch generated on a surface thereof. In this case, the touch panel 110 is formed as a decompression type such as a resistive type or a capacitive type.

The cover chassis 120 performs a function of protecting an internal configuration of the user terminal 100 together with the touch panel 110. More specifically, the cover chassis 120 is formed for protecting an internal configuration of the user terminal 100 in at least one direction in the user terminal 100. Here, the cover chassis 120 may be formed with a synthetic resin, or a metal material such as stainless steel or titanium (Ti). The cover chassis 120 is formed having a structure including a receiving area 121 for receiving a cover window in one direction. In this case, the cover chassis 120 has a receipt stopper 123, protruding from an edge area to a central area of the receiving area 121, for supporting the cover window. Here, the receipt stopper 123 supports the touch panel 110 in a direction opposite to a direction of receiving the touch panel 110 in the receiving area 121.

The display panel 130 is an element of an internal configuration of the user terminal 100 and performs a substantial operation of the user terminal 100. In this case, the display panel 130 performs a function of displaying an image. The display panel 130 is received in the receiving area 121 of the cover chassis 120 in a direction opposite to the direction of receiving the touch panel 110 in the receiving area 121 of the cover chassis 120. The display panel 130 is protected by the touch panel 110 and the cover chassis 120. In this case, the display panel 130 includes a Liquid Crystal Display (LCD) panel and a Back Light Unit (BLU).

The panel bracket 140 performs a function of fixing elements of an internal configuration of the user terminal 100. The panel bracket 140 fixes the display panel 130 by supporting the display panel 130. The panel bracket 140 performs a function of protecting an internal configuration of the user terminal 100 together with the touch panel 110 and the cover chassis 120. In this case, the panel bracket 140 is formed for protecting an internal configuration of the user terminal 100 in at least one direction in the user terminal 100. That is, the panel bracket 140 is fastened to the cover chassis 120 through an edge area to form an internal space.

Thereby, in the user terminal 100, the display panel 130 is received and protected in an internal space formed by the touch panel 110, the cover chassis 120, and the panel bracket 140.

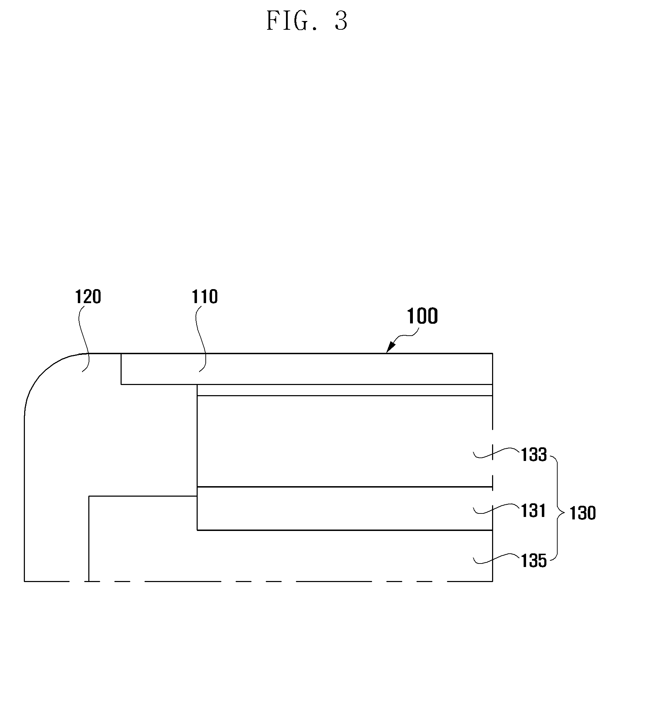

FIG. 3 is a cross-sectional view illustrating a user terminal according to an exemplary embodiment of the present invention.

Referring to FIG. 3, in the user terminal 100, the touch panel 110 is formed as a panel assembly. That is, the touch panel 110 includes a cover window and an electrode sheet. The cover window is externally exposed in the user terminal 100. In this case, a contact of a touch may occur on a surface of the cover window. The cover window transmits light, generated from the inside of the user terminal 100, to the outside of the user terminal 100. The cover window also transmits light, arriving from the outside of the user terminal 100, to the inside of the user terminal 100. The electrode sheet is adhered to a lower surface of the cover window. In the electrode sheet, a physical quantity, for example resistance or capacitance, is changed according to a contact on a cover window surface. Here, the electrode sheet is formed with a transparent conductive film having electrical conductivity, for example Indium Tin Oxide (ITO). That is, the touch panel 110 detects a touch according to a change of a physical quantity in the electrode sheet. In an exemplary embodiment, there may be a plurality of electrode sheets provided.

In the user terminal 100, the display panel 130 includes a light guide panel 131, a glass panel 133, and a panel suspension 135. In this case, the display panel 130 is formed by sequentially stacking the panel suspension 135, the light guide panel 131, and the glass panel 133.

The light guide panel 131 displays an image by outputting light that is generated internally. The light guide panel 131 includes a light source and a light guide plate. The light source generates and outputs light. In this case, the light source may be a line light source such as a Cold Cathode Fluorescent Lamp (CCFL) or a Hot Fluorescent Lamp (HCFL), or a point light source such as a Light Emitting Diode (LED). The light guide plate receives light from the light source and transfers the light to the glass panel 133. In this case, the light guide plate may be formed with a transparent material of plastic such as acryl.

The glass panel 133 is mounted on the light guide panel 131 in the display panel 130. The glass panel 133 receives light output from the light guide panel 131 and provides an image. In this case, the glass panel 133 may be an LCD panel.

The panel suspension 135 is mounted in a lower surface of the light guide panel 131 to support the light guide panel 131. The panel suspension 135 performs a function of compensating the strength of the display panel 130.

According to an exemplary embodiment, a space is formed between the touch panel 110 and the display panel 130 so that the touch panel 110 and the display panel 130 are not in close contact in the user terminal 100. In an exemplary implementation, the space between the touch panel 110 and the display panel 130 may be filled with air or a foreign substance may be injected in the space between the touch panel 110 and the display panel 130. Thereby, visibility of an image may be deteriorated through the display panel 130. That is, in the user terminal 100, a display performance of the display panel 130 may be deteriorated.

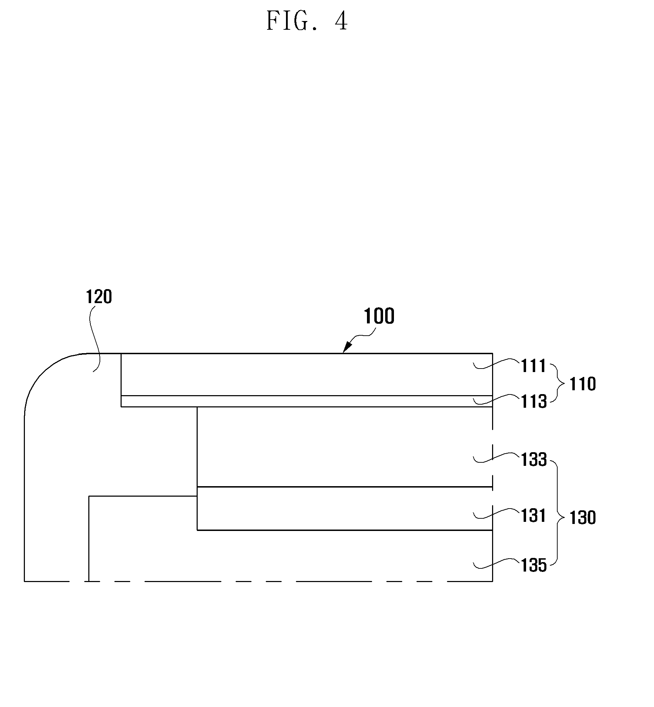

FIG. 4 is a cross-sectional view illustrating a user terminal according to an exemplary embodiment of the present invention.

Referring to FIG. 4, in a user terminal 100, a touch panel 110 includes a panel assembly 111 and an adhesive layer 113.

The panel assembly 111 performs a function of detecting a touch generated on a surface thereof. The panel assembly 111 includes a cover window, an adhesive sheet, and an electrode sheet. The cover window is externally exposed in the user terminal 100. In this case, a contact of a touch may occur on a surface of the cover window. The cover window transmits light, generated from the inside of the user terminal 100, to the outside of the user terminal 100. The cover window also transmits light, arriving from the outside of the user terminal 100, to the inside of the user terminal 100. The adhesive sheet is adhered to a lower surface of the cover window. Here, the adhesive sheet is formed with, for example, Optical Clear Adhesive (OCA). The electrode sheet is adhered to a lower surface of the adhesive sheet. In the electrode sheet, a physical quantity, for example resistance or capacitance, is changed according to a contact on the cover window surface. Here, the electrode sheet is a transparent conductive film having electrical conductivity and may be formed with, for example, ITO. That is, the panel assembly 111 detects a touch according to a change of a physical quantity in the electrode sheet.

The adhesive layer 113 is adhered to a lower surface of the panel assembly 111 in the touch panel 110. The adhesive layer 113 is interposed between the panel assembly 111 and a display panel 130 to closely contact the touch panel 110 and the display panel 130. Here, the adhesive layer 113 may be formed with, for example OCA or a Super View Resin (SVR).

According to an exemplary embodiment, the touch panel 110 and the display panel 130 are in close contact through the adhesive layer 113. That is, when manufacturing the user terminal 100, the touch panel 110 and the display panel 130 are adhered using the adhesive layer 113 in a lamination process. Thereby, a space is not formed between the touch panel 110 and the display panel 130. Therefore, visibility of an image can be improved through the display panel 130. That is, in the user terminal 100, a display performance of the display panel 130 can be improved.

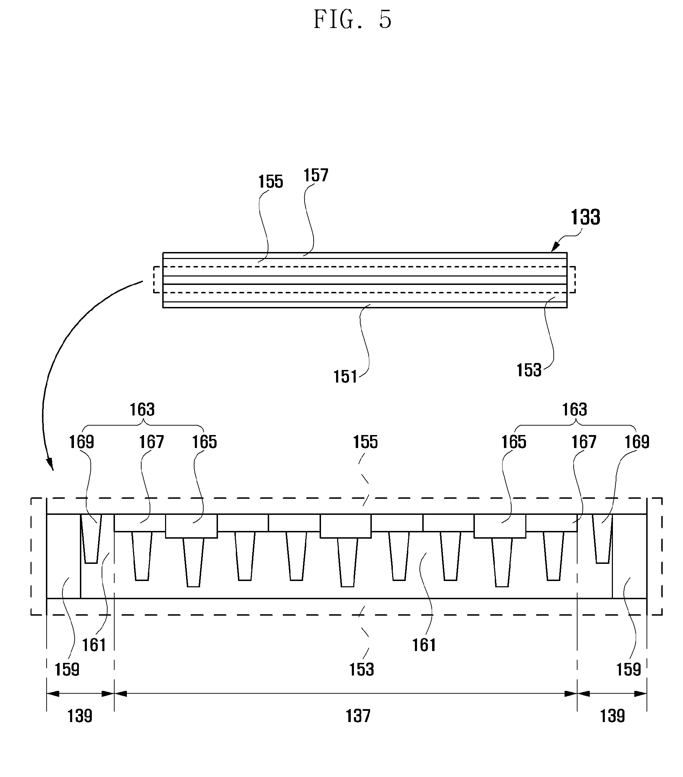

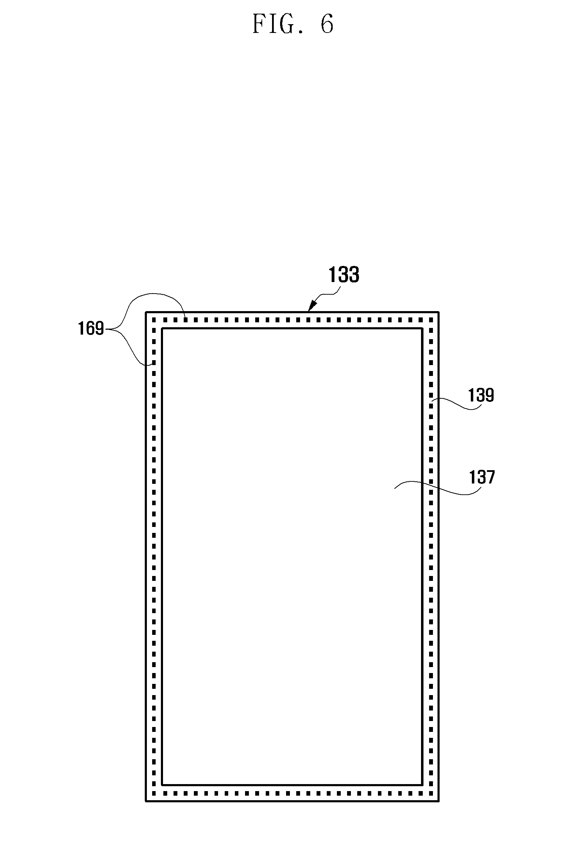

FIG. 5 is a cross-sectional view illustrating a display panel according to an exemplary embodiment of the present invention, and FIG. 6 is a plan view illustrating a display panel according to an exemplary embodiment of the present invention.

Referring to FIGs. 5 and 6, the display panel 130 is divided into an active area 137 and a black matrix 139. The active area 137 substantially displays an image in the display panel 130. In this case, the active area 137 corresponds to a central area in the display panel 130. The black matrix 139 defines the active area 137 by intercepting light in the display panel 130. In this case, the black matrix 139 corresponds to an edge area of the active area 137 in the display panel 130. In the display panel 130, the glass panel 133 includes a lower polarizing film 151, a lower glass plate 153, an upper glass plate 155, an upper polarizing film 157, a sealing member 159, a liquid crystal layer 161, and photo spacers 163.

The lower polarizing film 151 is disposed at an upper surface of the light guide panel 131. In this case, the lower polarizing film 151 only passes specific polarized light from light that is output from the light guide panel 131 and absorbs or intercepts the remaining light.

The lower glass plate 153 is disposed at an upper surface of the lower polarizing film 151. In this case, the lower glass plate 153 changes the transmittance of light output from the light guide panel 131. For this, the lower glass plate 153 controls polarized light that passes through the lower polarizing film 151 in a desired shape by changing the arrangement of liquid crystals in the liquid crystal layer 161. Here, the lower glass plate 153 may be formed with, for example, a Thin Film Transistor (TFT) substrate.

The upper glass plate 155 is disposed above the lower glass plate 153. In this case, the upper glass plate 155 provides light that is passing through liquid crystals of the liquid crystal layer 161 with a predetermined color. Here, the upper glass plate 155 may be formed with, for example a Color Filter (C/F) substrate. That is, the upper glass plate 155 is formed with a plurality of Red, Green, Blue (RGB) pixels, i.e., red pixels, green pixels, and blue pixels for representing light with a predetermined color.

The upper polarizing film 157 is disposed at an upper surface of the upper glass plate 155. In this case, the upper polarizing film 157 passes light that is provided from the upper glass plate 155. The upper polarizing film 157 only passes specific polarized light from light that is arriving from the outside of the user terminal 100 and absorbs or intercepts the remaining light.

The sealing member 159 is interposed between the lower glass plate 153 and the upper glass plate 155. Thereby, the sealing member 159 separates the lower glass plate 153 and the upper glass plate 155 from each other. The sealing member 159 is disposed at a position corresponding to the black matrix 139 in the display panel 130. In this case, the sealing member 159 has a structure of enclosing an edge area of the glass panel 133. Thereby, the sealing member 159 forms a sealed space between the lower glass plate 153 and the upper glass plate 155. Here, the sealing member 159 may be formed with, for example, Glass Fiber (G/F).

The liquid crystal layer 161 is formed between the lower glass plate 153 and the upper glass plate 155. That is, the liquid crystal layer 161 is formed with liquid crystals filled in a sealed space formed between the lower glass plate 153 and the upper glass plate 155 by the sealing member 159. In an exemplary implementation, in the liquid crystal layer 161, liquid crystals should be formed with a quantity corresponding to a value of -6% to -7%. In this case, when a voltage is applied to each of the lower glass plate 153 and the upper glass plate 155, an electric field is formed in the liquid crystal layer 161 between the lower glass plate 153 and the upper glass plate 155. The arrangement of the liquid crystals is changed in the liquid crystal layer 161 and light having a specific wavelength is reflected according to an intensity of an electric field.

The photo spacers 163 are mounted on one of the lower glass plate 153 and the upper glass plate 155 such that they are disposed between the lower glass plate 153 and the upper glass plate 155. The photo spacers 163 sustain a gap between the lower glass plate 153 and the upper glass plate 155. That is, when an external pressure is applied to the display panel 130, the photo spacers 163 sustain a gap between the lower glass plate 153 and the upper glass plate 155 to be equal to or greater than a value corresponding to a height of the photo spacers 163. Further, the photo spacers 163 support flow of liquid crystals in the liquid crystal layer 161. That is, when an external pressure is applied to the display panel 130, the photo spacers 163 enable liquid crystals to more smoothly flow between the lower glass plate 153 and the upper glass plate 155. Here, the photo spacers 163 may be formed with, for example, a photosensitive resin material. The photo spacers 163 include main photo spacers 165, sub photo spacers 167, and dummy photo spacers 169.

The main photo spacers 165 and the sub photo spacers 167 are disposed in the active area 137. The main photo spacers 165 and the sub photo spacers 167 are received in the liquid crystal layer 161. Thereby, the main photo spacers 165 and the sub photo spacers 167 support flow of liquid crystals within the active area 137. Here, the main photo spacers 165 are disposed to correspond to red pixels and green pixels, and the sub photo spacers 167 are disposed to correspond to blue pixels.

In this case, the main photo spacers 165 and the sub photo spacers 167 are formed having different sizes. That is, the main photo spacers 165 have a height between 3.35µm and 3.75 µm. In an exemplary embodiment, the main photo spacers 165 have a height of 3.55µm. The sub photo spacers 167 have a height between 2.90µm and 3.30µm. In an exemplary embodiment, the sub photo spacers 167 have a height of 3.10 µm. Alternatively, the main photo spacers 165 and the sub photo spacers 167 have a height difference of 0.45 µm. Further, the main photo spacers 165 and the sub photo spacers 167 are disposed in the active area 137 having a respective predetermined density. That is, the main photo spacers 165 are disposed having a density between 9/360 and 11/360 to correspond to a plurality of dots constituting the active area 137. In an exemplary embodiment, the main photo spacers 165 are disposed having a density of 1/36 to correspond to dots of the active area 137. The sub photo spacers 167 are disposed having a density between 297/360 and 1 to correspond to a plurality of dots constituting the active area 137. In an exemplary embodiment, the sub photo spacers 167 should be disposed having a density of 33/36 to correspond to dots of the active area 137. Here, each dot corresponds to each RGB pixel.

The dummy photo spacers 169 are disposed at the black matrix 139 adjacent to the sealing member 159. The dummy photo spacers 169 are received in the liquid crystal layer 161. In other words, the dummy photo spacers extend from one of the glass plates into the liquid crystal layer. Thereby, the dummy photo spacers 169 support flow of liquid crystals within the black matrix 139 together with the sealing member 159. That is, the dummy photo spacers 169 invert a flow direction of liquid crystals advancing from the active area 137 to the black matrix 139. In other words, when liquid crystals flow from the active area 137 to the black matrix 139, the dummy photo spacers 169 enable liquid crystals to flow from the black matrix 139 to the active area 137 by converting a flow direction of liquid crystal. It will be appreciated that the dummy photo spacers perform a spacing function like the other spacers. The dummy photo spacers can be described as "edge photo spacers", located generally between perimeter portions of the glass plates, adjacent to the sealing member. Further the dummy spacers occupy some of the volume for reflecting the flow back into the active area in order to reduce the flow from the edge of one glass plate to the edge of the other glass plate, for example the structure or shape of a dummy photo spacer can reduce a vertical flow. The dummy photo spacers 169 support the flow of liquid crystals within the black matrix, together with the sealing member, in the following sense. The dummy photo spacers and the sealing member can reflect the flow like a seawall, consequently they support flow of liquid crystals. Further, the dummy photo spacers keep the edge portions of the glass plates apart, and so maintain a space or channel in which the liquid crystal can flow. They also help drive flow when pressure is applied (for example pressure tending to urge the edges of the glass plates together). The dummy (or edge) spacers 169 invert a flow direction of liquid crystals in the following sense. The dummy photo spacers act like a wall (e.g. a seawall) and reflect the flow. The flow direction is thereby reversed. The dummy photo spacers reflect the flow more effectively than would the sealing member without the spacers. The dummy spacers can be made of PI(Polyimide), thus have elastic and flexible characters, and also can be photosensitive plastic. The dummy spacers thus help reflect, divert, disrupt, or re-direct liquid crystal flow back towards the active area.

In this case, the dummy photo spacers 169 are divided into main dummy photo spacers and sub dummy photo spacers according to a size. Here, the main dummy photo spacers have a height between 3.35 µm and 3.75 µm. In an exemplary implementation, the main dummy photo spacers have a height of 3.55 µm. The sub dummy photo spacers have a height between 2.90 µm and 3.30 µm. In an exemplary implementation, the sub dummy photo spacers have a height of 3.10 µm. Alternatively, the main dummy photo spacers and the sub dummy photo spacers have a height difference of 0.45 µm. Further, the main dummy photo spacers and the sub dummy photo spacers are disposed at the black matrix 139 in the respective predetermined density. That is, the main dummy photo spacers are disposed having a density between 9/360 and 11/360 to correspond to a plurality of dots constituting the black matrix 139. In an exemplary implementation, the main dummy photo spacers are disposed having a density of 1/36 to correspond to dots of the black matrix 139. The sub dummy photo spacers are disposed having a density between 297/360 and 1 to correspond to a plurality of dots constituting the black matrix 139. In an exemplary implementation, the sub dummy photo spacers are disposed having a density of 33/36 to correspond to dots of the black matrix 139.

According to the present exemplary embodiment, the photo spacers 163 enable liquid crystals to more smoothly flow between the lower glass plate 153 and the upper glass plate 155. That is, in the active area 137, the main photo spacers 165 and the sub photo spacers 167 are received in the liquid crystal layer 161 to support flow of liquid crystal. In this case, the main photo spacers 165 and the sub photo spacers 167 support flow of liquid crystals within the active area 137. In the black matrix 139, the dummy photo spacers 169 are received in the liquid crystal layer 161 to support flow of liquid crystals together with the sealing member 159. In this case, the dummy photo spacers 169 invert a flow direction of liquid crystals advancing from the active area 137 to the black matrix 139. In other words, the photo spacers 163 uniformly distribute liquid crystals between the lower glass plate 153 and the upper glass plate 155. In certain embodiments the dummy (edge) spacers 169 and other spacers 163 are tapered, becoming more narrow as they extend from their roots to their tips, in the liquid crystal. In alternative embodiments the spacers may, however, have an alternative, our various shapes (not necessarily tapered).

The foregoing exemplary embodiment describes an example in which the display panel 130 is formed with an LCD panel and a BLU. However, the present invention is not limited thereto. That is, even if the display panel 130 does not include a BLU, the display panel 130 includes an LCD panel and thus the present invention can be embodied. In other words, even in a case where the display panel 130 is formed in a reflective type of displaying an image by reflecting light arriving from the outside as well as an emissive type of displaying an image by generating light in the display panel 130, the present invention can be embodied.

According to exemplary embodiments of the present invention, liquid crystals more smoothly flow in the display panel 130 of the user terminal 100. Thereby, liquid crystals are uniformly distributed between the lower glass plate 153 and the upper glass plate 155 of the display panel 130. In other words, even if a pressure is applied to the display panel 130, liquid crystals are not condensed in a specific area between the lower glass plate 153 and the upper glass plate 155. Thereby, a yellowing phenomenon does not occur in an edge area of the display panel 130. Further, an empty space is not formed between the lower glass plate 153 and the upper glass plate 155 of the display panel 130. Thereby, the display panel 130 is protected from an external impact. Accordingly, when manufacturing the user terminal 100, a defect is suppressed from occurring in the display panel 130.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

As described above, in a user terminal and a display panel thereof according to exemplary embodiments of the present invention, liquid crystals flow more smoothly. Thereby, liquid crystals are uniformly distributed between glass plates of the display panel. In other words, even if a pressure is applied to the display panel, liquid crystals are not condensed in a specific area between the glass plates. Thereby, a yellowing phenomenon does not occur in an edge area of the display panel. Further, an empty space is not formed between the glass plates of the display panel. Thereby, the display panel is protected from an external impact. Accordingly, when manufacturing the user terminal, a defect is suppressed from occurring in the display panel.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A display panel mounted in a user terminal, the display panel comprising:
glass plates, each comprising an active area for displaying an image and a black matrix at an edge area of the active area;
a liquid crystal layer between the glass plates; and
photo spacers, mounted on one of the glass plates and received in the liquid crystal layer, for supporting flow of liquid crystals in the liquid crystal layer and for sustaining a gap between the glass plates,
wherein the photo spacers comprise dummy photo spacers disposed at the black matrix between the glass plates for inverting a flow direction of liquid crystals advancing toward the black matrix from the active area.

2. The display panel of claim 1, further comprising a sealing member between the glass plates at a location corresponding to the black matrix for sealing a space for the liquid crystal layer between the glass plates.

3. The display panel of claim 1 or claim 2, wherein the photo spacers comprise main photo spacers and sub photo spacers, the main photo spacers and the sub photo spacers having different sizes.

4. The display panel of claim 3, wherein the main photo spacers and the sub photo spacers are disposed having respective predetermined densities.

5. The display panel of claim 4, wherein the main photo spacers are disposed having a density between 9/360 and 11/360 to correspond to a plurality of dots constituting at least one of the active area and the black matrix, and
the sub photo spacers are disposed having a density between 297/360 and 1 to correspond to the dots.

6. The display panel of any one of claims 3 to 5, wherein the main photo spacers have a height between 3.35 µm and 3.75 µm, and
the sub photo spacers have a height between 2.90 µm and 3.30 µm.

7. The display panel of any preceding claim, wherein the liquid crystals are formed in a quantity between -6 % and -7% in the liquid crystal layer.

8. A user terminal comprising:
a touch panel for detecting a touch generated on a surface thereof; and
a display panel comprising glass plates, each disposed at a lower surface of the touch panel and comprising an active area for displaying an image and a black matrix at an edge area of the active area, a liquid crystal layer between the glass plates, and photo spacers, mounted on one of the glass plates and received in the liquid crystal layer, for supporting flow of liquid crystals in the liquid crystal layer and for sustaining a gap between the glass plates,
wherein the photo spacers comprise dummy photo spacers disposed at a black matrix between the glass plates for inverting a flow direction of liquid crystals advancing toward the black matrix from the active area.

9. The user terminal of claim 8, further comprising an adhesive layer interposed between the touch panel and the display panel for closely contacting the touch panel and the display panel.

10. The user terminal of claim 8 or claim 9, wherein the display panel further comprises a sealing member between the glass plates at a location corresponding to the black matrix for sealing a space for the liquid crystal layer between the glass plates.

11. The user terminal of any one of claims 8 to 10, wherein the photo spacers comprise main photo spacers and sub photo spacers, the main photo spacers and the sub photo spacers having different sizes.

12. The user terminal of claim 11, wherein the main photo spacers and the sub photo spacers are disposed having respective predetermined densities.

13. The user terminal of claim 12, wherein the main photo spacers are disposed having a density between 9/360 and 11/360 to correspond to a plurality of dots constituting at least one of the active area and the black matrix, and
the sub photo spacers are disposed having a density between 297/360 and 1 to correspond to the dots.

14. The user terminal of any one of claims 11 to 13, wherein the main photo spacers have a height between 3.35 µm and 3.75 µm, and
the sub photo spacers have a height between 2.90 µm and 3.30 µm.

15. The user terminal of any one of claims 11 to 14, wherein the liquid crystals are formed in a quantity between -6 % and -7% in the liquid crystal layer.
